# EUROPEAN PATENT APPLICATION

(11) **EP 4 694 463 A1**
(43) Date of publication of application: **11.02.2026**
(21) Application number: 23932107.8
(22) Date of filing: 07.04.2023
(51) Int. Cl.: H04W 72/0457, H04W 8/24, H04W 72/232

(54) **USER EQUIPMENT AND WIRELESS COMMUNICATION METHOD**

(71) Applicant: NTT DOCOMO, INC., Tokyo 100-6150 (JP)
(72) Inventor: OKANO Mayuko, Tokyo 100-6150 (JP); HARADA Hiroki, Tokyo 100-6150 (JP); OKAMURA Masaya, Tokyo 100-6150 (JP)
(74) Representative: Hoffmann Eitle
(86) International application number: PCT/JP2023/014455
(87) International publication number: WO 2024/209697

(57) **Abstract**

A terminal assumes that support for cross carrier scheduling in which scheduling is applied across multiple carriers is mandatory when supporting scheduling targeted for a combination of multiple cells using single downlink control information, and transmits terminal capability information relating to scheduling based on the assumption.

## Description

### TECHNICAL FIELD

The present disclosure relates to a terminal and a radio communication method that supports a mechanism for scheduling data channels transmitted by multiple carriers, using single downlink control information transmitted by a specific carrier.

### BACKGROUND ART

The 3rd Generation Partnership Project (3GPP: Registered Trademark) has prepared a specification for the 5th generation mobile communication system (which may be called 5G, New Radio (NR), or Next Generation (NG)), and is also in the process of specifying the next generation called Beyond 5G, 5G Evolution, or 6G.

In 3GPP Release 18, the introduction of a function for scheduling PDSCH (Physical Downlink Shared Channel)/PUSCH (Physical Uplink Shared Channel) which are transmitted by multiple component carriers (CC) using single downlink control information (DCI) has been discussed (Non-Patent Literature 1). This function is called Single DCI Multi-carrier PDSCH/PUSCH scheduling or Single DCI Multi-Cell PDSCH/PUSCH scheduling (hereinafter, it will be described as Single DCI Multi-Cell PDSCH/PUSCH scheduling) .

In order to support the Single DCI Multi-Cell PDSCH/PUSCH scheduling, a single DCI format (which may be called DCI format 0_X/1_X, etc.) with which it is possible to perform scheduling on the PDSCH/PUSCH of multiple cells has been agreed (Non-Patent Literature 2).

### CITATION LIST

### NON-PATENT LITERATURE

Non-Patent Literature 1: "New WID on Multi-carrier enhancements", RP-213577, 3GPP TSG RAN Meeting #94e, 3GPP, December 2021
Non-Patent Literature 2: "RAN1 Chair's Notes", RAN1 Chair's Notes, 3GPP, May 2022

### SUMMARY OF INVENTION

When Single DCI Multi-Cell PDSCH/PUSCH scheduling described above is supported, the following problem is considered. Specifically, a terminal (User Equipment, UE) cannot determine a relationship with existing cross-carrier scheduling targeted for an existing single cell, and how to support various functions specified for Single DCI Multi-Cell PDSCH/PUSCH scheduling. Therefore, there is a concern that stable and appropriate operations cannot be guaranteed regarding Single DCI Multi-Cell PDSCH/PUSCH scheduling.

Therefore, the present disclosure has been made in view of such a situation, and an object of the present disclosure is to provide a terminal and a radio communication method with which it is possible to achieve stable and appropriate operations even when Single DCI Multi-Cell PDSCH/PUSCH scheduling is introduced.

An aspect of the present disclosure is a terminal (UE 200) including: a control unit (control unit 270) that assumes that support for cross carrier scheduling in which scheduling is applied across multiple carriers is mandatory when supporting scheduling targeted for a combination of multiple cells using single downlink control information; and a transmission unit (control signal and reference signal processing unit 240) that transmits terminal capability information relating to scheduling based on the assumption.

An aspect of the present disclosure is a terminal (UE 200) including: a control unit (control unit 270) that assumes that support for a specific terminal capability relating to scheduling is mandatory or optional when supporting the scheduling targeted for a combination of multiple cells using single downlink control information; and a transmission unit (control signal and reference signal processing unit 240) that transmits terminal capability information relating to scheduling based on the assumption.

### BRIEF DESCRIPTION OF DRAWINGS

[FIG. 1] FIG. 1 is an overall schematic diagram of a radio communication system 10 according to a present embodiment.
[FIG. 2] FIG. 2 is a diagram illustrating frequency bands used in the radio communication system 10.
[FIG. 3] FIG. 3 is a diagram illustrating a configuration example of radio frames, sub-frames, and slots used in the radio communication system 10.
[FIG. 4] FIG. 4 is a functional block configuration diagram of gNB 100 and UE 200.
[FIG. 5] FIG. 5 is a diagram illustrating an example of a scheduling scheme that can be supported by the radio communication system 10.
[FIG. 6] FIG. 6 is a diagram illustrating an example of PDSCH scheduling using Single DCI Multi-Cell PDSCH/PUSCH scheduling.
[FIG. 7] FIG. 7 is a diagram illustrating an example of a relationship between a scheduling cell and a scheduled cell.
[FIG. 8] FIG. 8 is a diagram illustrating a configuration example of Configurations of RBG size P.
[FIG. 9] FIG. 9 is a diagram illustrating an example of a hardware configuration of the gNB 100 and the UE 200.
[FIG. 10] FIG. 10 is a diagram illustrating a configuration example of a vehicle 2001.

### DESCRIPTION OF EMBODIMENT

An embodiment will be described below with reference to the drawings. Note that the same or similar reference numerals have been attached to the same functions and configurations, and a description thereof will be omitted as appropriate.

### (1) Overall schematic configuration of radio communication system

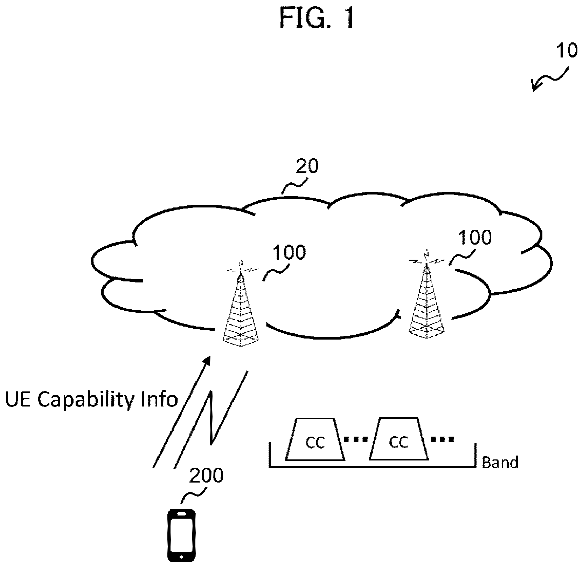

FIG. 1 is an overall schematic diagram of a radio communication system 10 according to the present embodiment. The radio communication system 10 is a radio communication system according to 5G New Radio (NR), and includes a Next Generation-Radio Access Network 20 (hereinafter, it will be referred to as NG-RAN 20) and a terminal 200 (User Equipment 200; hereinafter, it will be referred to as UE 200).

Here, the radio communication system 10 may be a radio communication system according to a scheme called Beyond 5G, 5G Evolution, or 6G.

The NG-RAN 20 includes a radio base station 100 (hereinafter, it will be referred to as gNB 100). Here, the specific configuration of the radio communication system 10 including the number of the gNBs and the UEs is not limited to the example illustrated in FIG. 1.

The NG-RAN 20 actually includes a plurality of NG-RAN nodes, specifically gNBs (or ng-eNBs), and is connected to the core network (5GC not illustrated) according to 5G. Here, the NG-RAN 20 and 5GC may be simply referred to as a "network".

The gNB 100 is a radio base station according to NR, and performs a radio communication with the UE 200 according to NR. The gNB 100 and the UE 200 can support Massive MIMO that generates a beam BM with higher directivity by controlling radio signals transmitted from multiple antenna elements, carrier aggregation (CA) that uses multiple component carriers (CCs) bundled together, dual connectivity (DC) that simultaneously performs communication between the UE and each of the NG-RAN nodes, and the like.

The type of DC may be Multi-RAT Dual Connectivity (MR-DC) which utilizes a plurality of radio access technologies, or NR-NR Dual Connectivity (NR-DC) which utilizes only NR. In addition, the MR-DC may be E-UTRA-NR Dual Connectivity (EN-DC) in which the eNB constitutes a master node (MN) and the gNB constitutes a secondary node (SN), or NR-E-UTRA Dual Connectivity (NE-DC) in which the gNB constitutes a master node (MN) and the eNB constitutes a secondary node (SN).

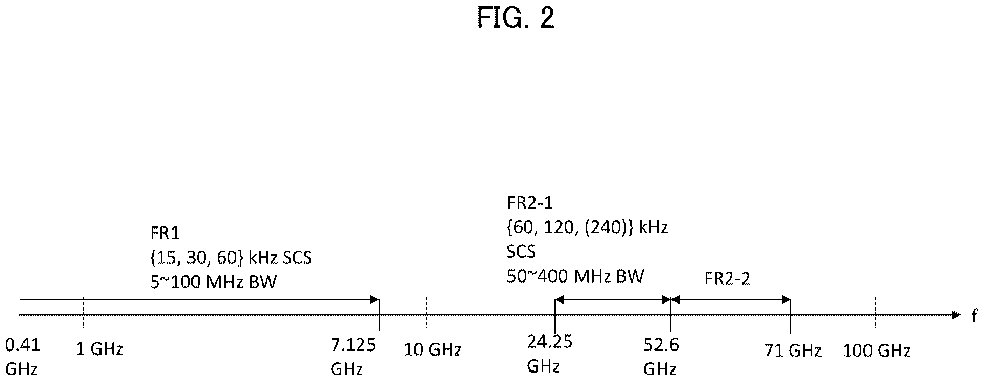

Further, the radio communication system 10 may support multiple frequency ranges (FRs). FIG. 2 is a diagram illustrating frequency bands used in the radio communication system 10.

- FR1: 410 MHz to 7.125 GHz
- FR2:
   - FR2-1: 24.25 GHz to 52.6 GHz
   - FR2-2: Over 52.6 GHz to 71 GHz

In FR1, sub-carrier spacing (SCS) of 15, 30, or 60 kHz and a bandwidth (BW) of 5 to 100 MHz may be used. FR2 has a higher frequency than FR1, and SCS of 60 or 120 kHz (may include 240 kHz) may be used, and a bandwidth (BW) of 50 to 400 MHz may be used.

Further, the radio communication system 10 also supports a higher frequency band than that of FR2. Specifically, the radio communication system 10 supports a frequency band exceeding 52.6 GHz and up to 114.25 GHz.

In addition, Cyclic Prefix-Orthologous Frequency Division Multiplexing (CP-OFDM)/Discrete Fourier Transform-Spread (DFT-S-OFDM) having larger Sub-Carrier Spacing (SCS) may be applied. Further, the DFT-S-OFDM may be applied not only to a downlink (DL), but also to an uplink (UL).

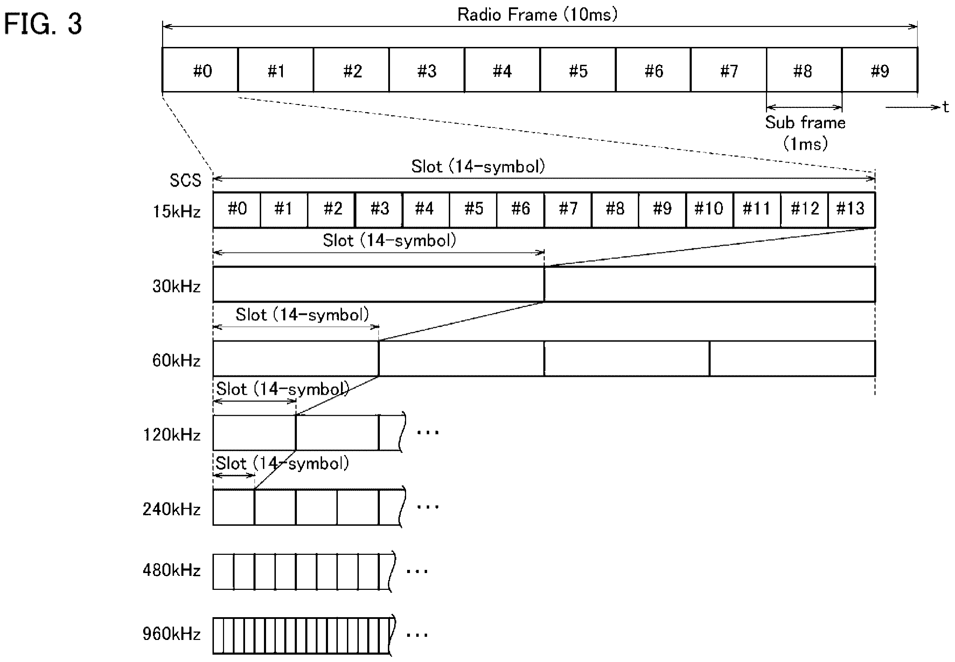

FIG. 3 is a diagram illustrating a configuration example of radio frames, sub-frames, and slots used in the radio communication system 10.

As illustrated in FIG. 3, one slot is constituted of 14 symbols, and the symbol period (and slot period) becomes shorter as the SCS becomes larger (wider). Note that the number of symbols constituting one slot may not necessarily be 14 symbols (for example, 28 or 56 symbols). Further, the number of slots for each subframe may vary depending on the SCS. Furthermore, the SCS may be wider than 240 kHz (for example, as illustrated in FIG. 3, 480 kHz, 960 kHz) .

The time direction (t) illustrated in FIG. 2 may be referred to as a time domain, a symbol period, symbol time, or the like. In addition, the frequency direction may be referred to as a frequency domain, a resource block, a resource block group (RBG), a sub-carrier, a bandwidth part (BWP), or the like.

In the radio communication system 10, the function relating to multiple carriers (specifically, CCs) may be extended as described above. Specifically, the radio communication system 10 may support the function (single DCI multi-slot PDSCH/PUSCH scheduling) for scheduling PDSCH (Physical Downlink Shared Channel) /PUSCH (Physical Uplink Shared Channel) transmitted by multiple slots, using the single downlink control information (DCI).

Specifically, the radio communication system 10 may support the following scheduling schemes: a scheduling scheme (self-carrier scheduling) in which the scheduling DCI and the channel to be scheduled are on the same CC; a cross-carrier scheduling scheme to which scheduling of the channels is applied across multiple CCs; and a scheduling scheme (multi-carrier scheduling) in which the channels are assigned to multiple different CCs using single DCI, that is, using one piece of DCI.

More specifically, the radio communication system 10 may support the function for scheduling PDSCH/PUSCH transmitted by multiple CCs using the single DCI (Single DCI Multi-carrier PDSCH/PUSCH scheduling or Single DCI Multi-Cell PDSCH/PUSCH scheduling). Hereinafter, it will be referred to as Single DCI Multi-Cell PDSCH/PUSCH scheduling.

While single DCI multi-slot PDSCH/PUSCH scheduling and Single DCI Multi-Cell PDSCH/PUSCH scheduling are available such that only one of them can be used and simultaneous use of both need not be possible, the radio communication system 10 may support the simultaneous use of both.

Further, in order to support such Single DCI Multi-Cell PDSCH/PUSCH scheduling, in the radio communication system 10, a single DCI format (may be called DCI format 0_X/1_X, or DCI format 0_3/1_3, or the like) with which it is possible to perform scheduling on PDSCH/PUSCH of multiple cells may be used. By using DCI according to the DCI format, it is possible to perform scheduling on multiple cells included in a combination of multiple cells (Set of cells) simultaneously.

### (2) Functional block configuration of radio communication system

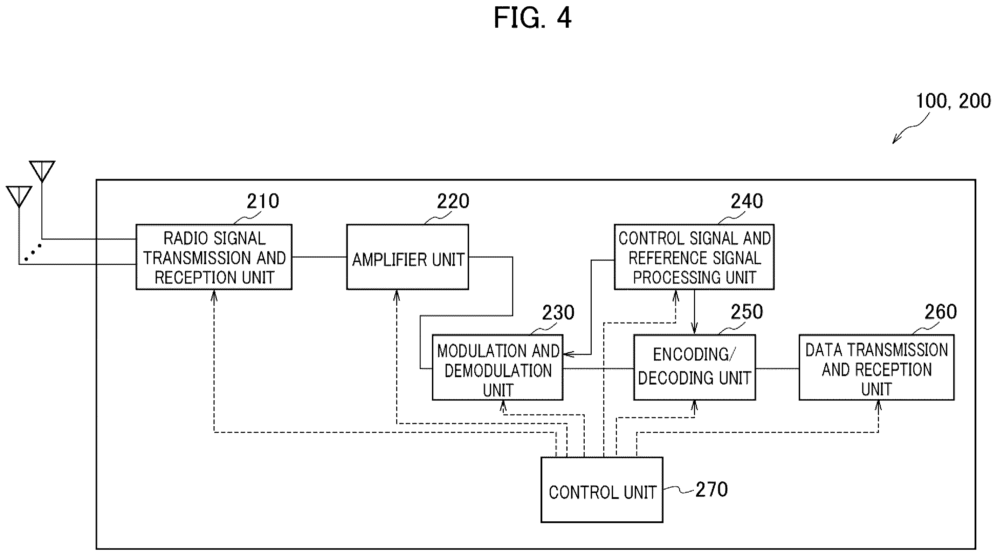

Next, a functional block configuration of the radio communication system 10 will be described. Specifically, a functional block configuration of the UE 200 will be described. FIG. 4 is a functional block configuration diagram of the gNB 100 and the UE 200.

As illustrated in FIG. 4, the UE 200 includes a radio signal transmission and reception unit 210, an amplifier unit 220, a modulation and demodulation unit 230, a control signal and reference signal processing unit 240, an encoding/decoding unit 250, a data transmission and reception unit 260, and a control unit 270.

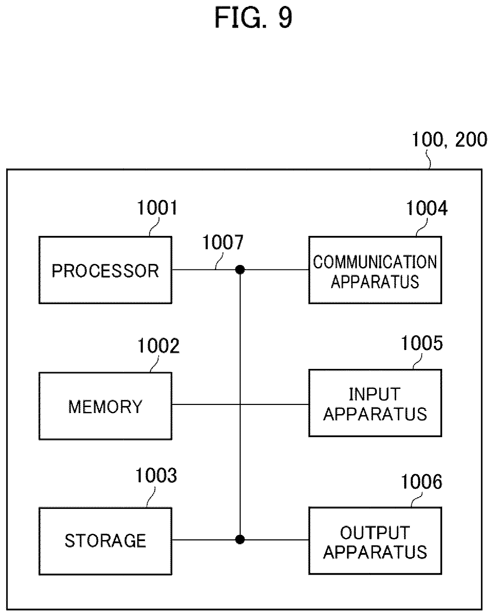

Note that only the main functional blocks relating to the description of the embodiment are illustrated in FIG. 4, and the UE 200 (gNB 100) includes other functional blocks (for example, power supply unit). In addition, FIG. 4 illustrates a functional block configuration of the UE 200, and please refer to FIG. 9 for a hardware configuration thereof.

The radio signal transmission and reception unit 210 transmits and receives radio signals according to NR. The radio signal transmission and reception unit 210 supports Massive MIMO that generates a beam BM with high directivity by controlling radio (RF) signals transmitted from a plurality of antenna elements, carrier aggregation (CA) that uses multiple component carriers (CCs) bundled together, dual connectivity (DC) that simultaneously performs communication between the UE and each of two NG-RAN nodes, and the like.

The amplifier unit 220 includes a PA (Power Amplifier)/LNA (Low Noise Amplifier) and the like. The amplifier unit 220 amplifies a signal output from the modulation and demodulation unit 230 to a predetermined power level. The amplifier unit 220 also amplifies an RF signal output from the radio signal transmission and reception unit 210.

The modulation and demodulation unit 230 performs data modulation and demodulation, a transmission power configuration, a resource block allocation, and the like for each predetermined communication destination (such as gNB 100). Cyclic Prefix-Orthogonal Frequency Division Multiplexing (CP-OFDM)/Discrete Fourier Transform-Spread (DFT-S-OFDM) may be applied in the modulation and demodulation unit 230. In addition, the DFT-S-OFDM may be used not only for an uplink (UL), but also for a downlink (DL).

The control signal and reference signal processing unit 240 performs processing relating to various control signals transmitted and received by the UE 200, and processing relating to various reference signals transmitted and received by the UE 200.

Specifically, the control signal and reference signal processing unit 240 receives various control signals transmitted from the gNB 100 via a predetermined control channel, for example, the control signals for the radio resource control layer (RRC). The control signal and reference signal processing unit 240 also transmits various control signals to the gNB 100 via a predetermined control channel.

The control signal and reference signal processing unit 240 performs processing using a reference signal (RS), such as a demodulation reference signal (DMRS) and a phase tracking reference signal (PTRS).

The DMRS is a terminal-specific reference signal (pilot signal) for estimating a fading channel used for data demodulation, which is known between a base station and the terminal. The PTRS is a terminal-specific reference signal for the purpose of estimating phase noise which becomes a problem in a high frequency band.

The reference signals may include, in addition to the DMRS and the PTRS, a Channel State Information-Reference Signal (CSI-RS), a Sounding Reference Signal (SRS), and a Positioning Reference Signal (PRS) for position information.

The channels include control channels and data channels. The control channels may include a PDCCH (Physical Downlink Control Channel), a PUCCH (Physical Uplink Control Channel), an RACH (Random Access Channel), Downlink Control Information (DCI) including a Random Access Radio Network Temporary Identifier (RA-RNTI), a Physical Broadcast Channel (PBCH), and the like.

In addition, the data channels may include a PDSCH, a PUSCH, and the like. The data may refer to data transmitted via the data channel.

The control signal and reference signal processing unit 240 can receive the downlink control information (DCI) transmitted from the network. Specifically, the control signal and reference signal processing unit 240 can receive the DCI according to the DCI format specified in 3GPP TS38.212. In particular, in the present embodiment, the control signal and reference signal processing unit 240 can receive the scheduling DCI for UL and DL. More specifically, the control signal and reference signal processing unit 240 can receive the DCI according to DCI format 0_0, 0_1, 0_2, 1_0, 1_1, 1_2.

Further, in the present embodiment, the control signal and reference signal processing unit 240 may receive the DCI according to DCI format 0_3, 1_3 for Single DCI Multi-Cell PDSCH/PUSCH scheduling.

The DCI format 0_0, 0_1, 0_2, 0_3 may be interpreted as a scheduling grant of UL. The DCI format 1_0, 1_1, 1_2, 1_3 may be interpreted as a scheduling assignment of DL.

The control signal and reference signal processing unit 240 can receive the DCI corresponding to single DCI multi-slot PDSCH/PUSCH scheduling, and the DCI corresponding to Single DCI Multi-Cell PDSCH/PUSCH scheduling.

Specifically, regarding Single DCI multi-slot PDSCH/PUSCH scheduling, the control signal and reference signal processing unit 240 can receive the single (one) DCI for scheduling channels transmitted by multiple slots. Further, regarding Single DCI Multi-Cell PDSCH/PUSCH scheduling, the control signal and reference signal processing unit 240 can receive the single (one) DCI for scheduling channels transmitted by multiple carriers.

Here, the channels may include the control channels and data channels described above, and may not be particularly limited in the uplink direction and the downlink direction, and may typically mean at least one of PDSCH or PUSCH. The carrier may mean a component carrier (CC), and may be interpreted simply as a carrier or subcarrier.

Further, the control signal and reference signal processing unit 240 may transmit capability information of the UE 200 to the network. In particular, in the present embodiment, the control signal and reference signal processing unit 240 can transmit the UE Capability Information (see FIG. 1) relating to scheduling to the gNB 100.

The control signal and reference signal processing unit 240 may transmit the terminal capability information relating to scheduling based on the assumption of the terminal capability (UE capability) relating to scheduling of the UE 200 performed by the control unit 270. In the present embodiment, the control signal and reference signal processing unit 240 may constitute a transmission unit. Here, the assumption of the terminal capability may mean to be specified, determined, or estimated that having a specific capability relating to scheduling is assumed. Additionally, a target of the assumption may include the terminal capability relating to scheduling according to an applicable scheduling scheme (cross carrier scheduling, single DCI multi-slot PDSCH/PUSCH scheduling, and Single DCI Multi-Cell PDSCH/PUSCH scheduling).

The encoding/decoding unit 250 performs data division/concatenation, channel coding/decoding, and the like for each predetermined communication destination (gNB 100 or another gNB).

Specifically, the encoding/decoding unit 250 divides the data output from the data transmission and reception unit 260 into predetermined sizes, and performs channel coding on the divided data. Further, the encoding/decoding unit 250 decodes the data output from the modulation and demodulation unit 230, and concatenates the decoded data.

The data transmission and reception unit 260 transmits and receives Protocol Data Unit (PDU) and Service Data Unit (SDU). Specifically, the data transmission and reception unit 260 performs assembly/disassembly of PDU/SDU in multiple layers (Media Access Control Layer (MAC), Radio Link Control Layer (RLC), Packet Data Convergence Protocol Layer (PDCP), and the like). In addition, the data transmission and reception unit 260 performs error correction and retransmission control of data based on a Hybrid automatic repeat request (HARQ).

The control unit 270 controls each functional block constituting the UE 200. In particular, in the present embodiment, the control unit 270 controls the transmission or reception of channels (for example, PDSCH/PUSCH; hereinafter, the same shall be applied) based on the DCI for single DCI multi-slot PDSCH/PUSCH scheduling.

In addition, the control unit 270 controls the transmission or reception of channels based on the DCI for Single DCI Multi-Cell PDSCH/PUSCH scheduling.

Thus, the control unit 270 may control the transmission or reception of channels based on at least one of the DCI for single DCI multi-slot PDSCH/PUSCH scheduling and the DCI for Single DCI Multi-Cell PDSCH/PUSCH scheduling. Further, single DCI multi-slot PDSCH/PUSCH scheduling and Single DCI Multi-Cell PDSCH/PUSCH scheduling may be used simultaneously, and the control unit 270 may simultaneously perform the control based on both of single DCI multi-slot PDSCH/PUSCH scheduling and Single DCI Multi-Cell PDSCH/PUSCH scheduling in parallel.

The control unit 270 may apply a different configuration to at least one of the cells, slots, or channels to be scheduled by the DCI for single DCI multi-slot PDSCH/PUSCH scheduling and the DCI for Single DCI Multi-Cell PDSCH/PUSCH scheduling. The cell type (primary cell (PCell), primary secondary cell (PSCell) and secondary cell (SCell)) may not be particularly limited, and the cell group (master or secondary) may be targeted. The channel type is also not particularly limited, and may be either in the UL direction or in the DL direction. Here, the PDSCH/PUSCH may be targeted.

Further, when the control unit 270 supports scheduling targeted for a combination of multiple cells (Set of cells) using the single downlink control information (single DCI), the control unit 270 may assume that support for cross carrier scheduling in which scheduling is applied across multiple carriers (CCs) is mandatory.

Specifically, when the UE 200 supports Single DCI Multi-Cell PDSCH/PUSCH scheduling, the control unit 270 may assume as a prerequisite that the UE 200 supports a function of cross carrier scheduling. The function of cross carrier scheduling will be described later.

Further, when the UE 200 supports only a case in which the cell to which the DCI is transmitted is not included in the multiple cells scheduled simultaneously by the DCI, the control unit 270 may assume that the terminal capability (UE Capability) relating to the cross carrier scheduling is mandatory. Here, the multiple cells scheduled simultaneously by the DCI may be called co-scheduled cells, and the cell to which the DCI is transmitted may be called a scheduling cell.

Alternatively, when the control unit 270 supports scheduling targeted for a combination of multiple cells (Set of cells) using the single downlink control information (Single DCI), the control unit 270 may assume that support for a specific terminal capability relating to the scheduling is mandatory or optional.

Specifically, when the UE 200 supports Single DCI Multi-Cell PDSCH/PUSCH scheduling, the control unit 270 may assume that the following terminal capabilities are mandatory or optional, for example.

- The number of co-scheduled cells
- The number of Sets of cells
- DCI format
- DCI size/BD (Blind Detection)/CCE (Control Channel Element) count
- FDRA (Frequency Domain Resource Allocation) RA type 0/1
- Notification method of schedule destination cell

As described above, the control unit 270 may assume that the support for the terminal capability relating to the number of cells scheduled simultaneously (the number of co-scheduled cells) or the number of sets of cells is at least either mandatory or optional. The specified contents of each terminal capability will be specifically described later.

Further, the gNB 100 may have a function equivalent to the UE 200 described above. Specifically, the gNB 100 (the control signal and reference signal processing unit 240) may constitute a transmission unit that transmits the downlink control information that instructs scheduling targeted for a combination of multiple cells, and constitute a reception unit that receives the terminal capability information relating to the scheduling from the UE 200.

### (3) Operation of radio communication system

Next, an operation of the radio communication system 10 will be described. Specifically, the operation corresponding to Single DCI Multi-Cell PDSCH/PUSCH scheduling while the UE 200 supports appropriate terminal capabilities will be described.

### (3.1) Assumption and problem

As described above, the radio communication system 10 may support the function for scheduling PDSCH/PUSCH of multiple CCs (Single DCI Multi-Cell PDSCH/PUSCH scheduling) using the single (one) DCI.

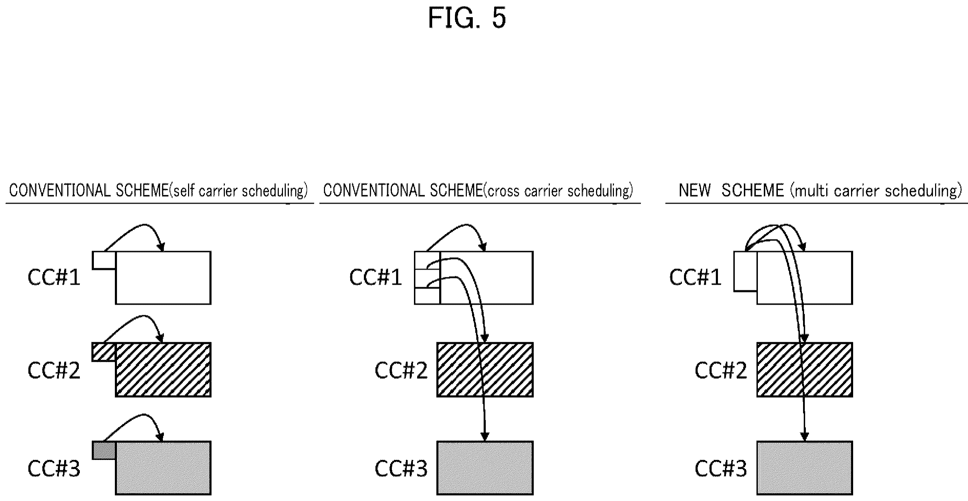

FIG. 5 illustrates an example of a scheduling scheme that can be supported by the radio communication system 10. Single DCI Multi-Cell PDSCH/PUSCH scheduling (Single DCI Multi-carrier PDSCH/PUSCH scheduling) has the following features in comparison with a scheme (conventional scheme) of preparing DCI for each CC and performing scheduling one by one (conventional scheme).
- (Advantage): The load (the number of blind decodes (BDs)) due to monitoring of DCI (PDCCH) can be reduced. In addition, the overall PDCCH overhead can be reduced (it is more effective as the size of Single DCI is smaller than DCI of the conventional scheme × the number of CCs).
- (Disadvantage): It is not possible to change instructions in detail for each CC (if making it possible to change, the size of Single DCI will increase, thereby increasing an error rate and overhead of PDCCH). If there is an error in the PDCCH, the data reception on all multiple CCs will fail.

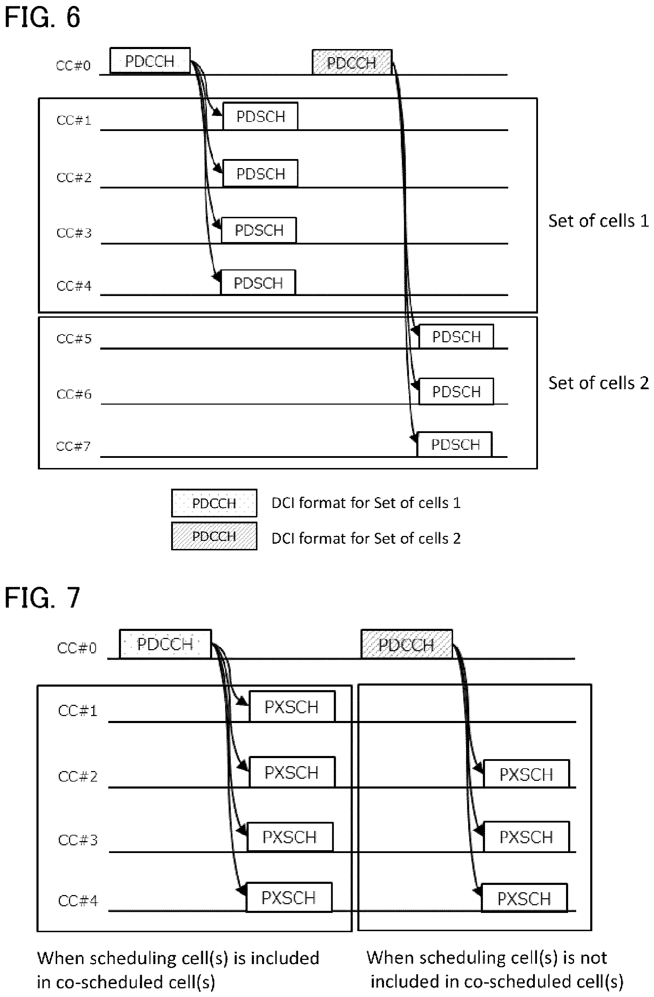

FIG. 6 illustrates an example of PDSCH scheduling using Single DCI Multi-Cell PDSCH/PUSCH scheduling. As described above, the DCI that performs scheduling on PUSCH/PDSCH of multiple cells using the single (one) DCI may be called DCI format 0_X/1_X (or DCI format 0_3/1_3).

The DCI format 0_X/1_X can simultaneously schedule a combination of cells included in a Set of cells to be scheduled. The following requirements may be applied to the Set of cells:
- One set of cells may include up to four cells.
- Optional cell is included in only one set of cells.

In FIG. 6, an example is illustrated in which Set of cells 1 includes CC#1/2/3/4 and Set of cells 2 includes CC#5/6/7. The respective DCI formats of Set of cells 1 and 2 may be included in separate PDCCHs.

The cell used for counting DCI size/PDCCH candidate (BD)/number of CCEs may be called the reference cell. One cell used for counting DCI size/PDCCH candidate (BD)/number of CCEs of the PDCCH that performs scheduling on the cells included in each Set of cells may be configured for each Set of cells. In FIG. 6, for example, the reference cell of Set of cells 1 may be CC#1, and the reference cell of Set of cells 2 may be CC#5. Here, the cell and the CC may be read interchangeably.

In this case, DCI size/PDCCH candidates (BD)/number of CCEs of the PDCCH (DCI for Set of cells 1) may be counted in CC#1. In addition, DCI size/PDCCH candidates (BD)/number of CCEs of the PDCCH (DCI for Set of cells 2) may be counted in CC#5.

Thus, when a Set of cells is configured in Single DCI Multi-Cell PDSCH/PUSCH scheduling, it is necessary to clarify the functions that the UE 200 supporting Single DCI Multi-Cell PDSCH/PUSCH scheduling should support as a prerequisite.

For example, whether support for existing cross carrier scheduling (which may be called single cell cross carrier scheduling) should be assumed as a prerequisite, whether each function specified for Single DCI Multi-Cell PDSCH/PUSCH scheduling should be supported as mandatory when realizing Single DCI Multi-Cell PDSCH/PUSCH scheduling, and the like.

### (3.2) Operation example

### (3.2.1) Overview of operation

The following operation examples clarify the operations relating to functions and reporting supported by the UE 200 in Single DCI Multi-Cell PDSCH/PUSCH scheduling, thereby realizing appropriate Single DCI Multi-Cell PDSCH/PUSCH scheduling according to terminal capability (UE Capability).

Operation example 1 clarifies the relationship with support for existing cross carrier scheduling functions. Operation example 2 clarifies the capabilities (basic capability/optional capability) that are mandatory or optional in the UE 200 that supports Single DCI Multi-Cell PDSCH/PUSCH scheduling.

### (3.2.2) Operation example 1

For the UE 200 supporting Single DCI Multi-Cell PDSCH/PUSCH scheduling, supporting the cross carrier scheduling function may be specified as a prerequisite.

Specifically, the function relating to cross carrier scheduling may be the function specified in FG (feature group) 6-10 (which may be cross carrier scheduling when scheduling cell and scheduled cell have the same SCS). Alternatively, the function relating to cross carrier scheduling may be the function specified in FG6-10a (which may be cross carrier scheduling when having different SCS between scheduling cell and scheduled cell). Here, the scheduled cell may mean the cell specified by the DCI.

FIG. 7 illustrates an example of the relationship between the scheduling cell and the scheduled cell. The left side of FIG. 7 illustrates an example in which the scheduling cell is included in the scheduled cells (here, co-scheduled cells that are scheduled at the same time). In FIG. 7, PDSCH/PUSCH are collectively referred to as PXSCH. The right side of FIG. 7 illustrates a case in which the scheduling cell is not included in the scheduled cells (co-scheduled cells).

In Single DCI Multi-Cell PDSCH/PUSCH scheduling, the UE capability relating to cross carrier scheduling may be specified as a prerequisite capability only for the UE 200 that supports the case where the scheduling cell is not included in the cells that are scheduled simultaneously (co-scheduled cells).

In Single DCI Multi-Cell PDSCH/PUSCH scheduling, the UE capability specified in FG6-10 may be specified as a prerequisite capability for the UE 200 that supports the case where the scheduling cell and the co-scheduled cell have the same SCS. Further, in Single DCI Multi-Cell PDSCH/PUSCH scheduling, the UE capability specified in FG 6-10a, in FG18-5, or in FG18-5b may be specified as a prerequisite capability for the UE 200 that supports the case where the scheduling cell and the co-scheduled cell have different SCS.

Here, the different UE capabilities may be specified depending on the SCS size of the scheduling cell and the co-scheduled cell. For example, if the SCS of the scheduling cell is larger than the SCS of the co-scheduled cell, the UE capability that reports the support for Single DCI Multi-Cell PDSCH/PUSCH scheduling may be specified. In addition, if the SCS of the scheduling cell is smaller than the SCS of the co-scheduled cell, the UE capability that reports the support for Single DCI Multi-Cell PDSCH/PUSCH scheduling may be specified.

### (3.2.3) Operation example 2

The UE 200 that supports Single DCI Multi-Cell PDSCH/PUSCH scheduling may, for example, support at least one of the following terminal capabilities as either a basic capability or an optional capability:
- The number of co-scheduled cells
- The number of sets of cells
- DCI format
- DCI size/BD (Blind Detection)/CCE (Control Channel Element) count
- FDRA (Frequency Domain Resource Allocation) RA type 0/1
- Notification method of schedule destination cell (co-scheduled cell)
- Type of HARQ-ACK (hybrid automatic repeat request-acknowledgement) codebook
- Others

One of the following may be specified for the number of co-scheduled cells:
- Support for simultaneous scheduling of at least 2, 3, or 4 DL cells (which may be read as channel and CC; hereinafter, the same shall be applied) is specified as a basic capability.
- Support for simultaneous scheduling of at least 2, 3, or 4 UL cells is specified as a basic capability.
- Support for simultaneous scheduling of 3 or 4 DL cells is specified as an optional capability.
- Support for simultaneous scheduling of 3 or 4 UL cells is specified as an optional capability.

One of the following may be specified for the number of Set of cells:
- Supporting Set of cells for at least 1, 2, or 3 DLs is specified as a basic capability.
- Supporting Set of cells for at least 1, 2, or 3 ULs is specified as a basic capability.
- Supporting Set of cells for 1, 2, 3, or 4 DLs is specified as an optional capability.
- Supporting Set of cells for 1, 2, 3, or 4 ULs is specified as an optional capability.
- The number of sets of cells to be supported may be reported as different values depending on whether the scheduling cell is the same among the sets of cells.

One of the following may be specified for the DCI format.
- Regarding a DCI format that can be monitored simultaneously with DCI format 0_X/1_X, a different UE capability is specified for each combination with each existing DCI format.

For example, the capability to be monitored simultaneously with at least DCI format 0_0/1_0 may be defined as a basic capability. Alternatively, the capability to be monitored simultaneously with DCI format 0_1/1_1 and/or DCI format 0_2/1_2 may be defined as either a basic capability or an optional capability.
- Different UE capabilities are specified depending on whether the cell monitoring DCI format 0_X/1_X is a PCell or an SCell.

One of the following may be specified for the DCI size/BD/CCE count.
- The count of DCI size/BD/CCE related to DCI format 0_X/1_X for a single cell in a scheduling cell or reference cell is specified as either a basic capability or an optional capability.

One of the following may be specified for the FDRA.
- In the case of FDRA Resource Allocation (RA) type 0, support for Configuration 3 of RBG size P of a resource block group (RBG) is specified as either a basic capability or an optional capability.
- In the case of FDRA RA type 1, support for RIV (Resource Indicator Value) configuration at RBG granularity is specified as either a basic capability or an optional capability.

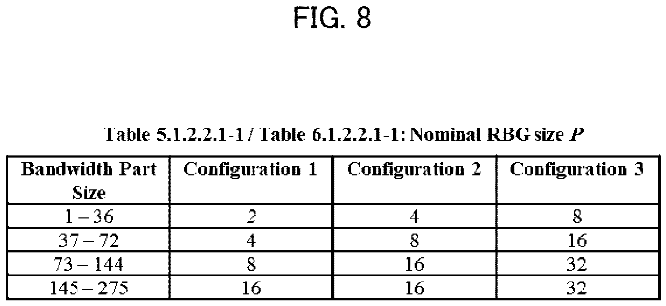

FIG. 8 illustrates a configuration example of Configurations of RBG size P. As illustrated in FIG. 8, in the case of FDRA type 0, Configuration 3 can be configured in Single DCI Multi-Cell PDSCH/PUSCH scheduling. Further, in the case of FDRA RA type 1, an RIV can be configured at the RBG granularity that is configured for DCI format 0_2/1_2 in Single DCI Multi-Cell PDSCH/PUSCH scheduling.

Regarding the notification methods of the scheduling destination cell, at least one of the following notification methods may be specified as a basic capability.
- Notification by means of the FDRA field included in DCI format 0_X/1_X
- Notification by means of the co-scheduled cell indicator included in DCI format 0_X/1_X

Regarding the types of HARQ-ACK codebooks, a different UE capability may be specified for each type of HARQ-ACK codebook (CB). For example, regarding HARQ-ACK feedback for PDSCH scheduled by DCI format 0_X/1_X, the Type 1 HARQ-ACK codebook may be configured as a basic capability. Alternatively, at least one of the Type 1/Type 2/Type 3/enhanced Type 3 HARQ-ACK codebook may be configured as either a basic capability or an optional capability.

The Type 1 HARQ-ACK CB may be interpreted as a method where the CB is determined semi-statically, and the Type 2 HARQ-ACK CB may be interpreted as a method where the CB is determined dynamically. The Type 3 HARQ-ACK CB may include HARQ-ACK bits for all HARQ process numbers across all CCs. The Enhanced Type 3 HARQ-ACK CB may include HARQ-ACK bits for an optional CC or an optional HARQ process number.

Further, regarding Single DCI Multi-Cell PDSCH/PUSCH scheduling, support for at least one of the following functions may be specified as either an optional capability or a basic capability.
- Notification of the ChannelAccess-Ctext-CAPC/ChannelAccess-Ctext by means of Shared spectrum (unlicensed band) operation and/or DCI format 0_X/1_X
- In the case of having different SCS between the scheduling cell and the co-scheduled cell
- Notification of the Priority (PDSCH or PUSCH) by means of DCI format 0_X/1_X
- Notification of the SCell dormancy by means of DCI format 0_X/1_X
- Notification of the PDCCH monitoring adaptation by means of DCI format 0_X/1_X
- Notification of the minimum applicable scheduling offset by means of DCI format 0_X/1_X
- Support for HPN (HARQ Process Number) with a maximum of 32

### (3.3) Others

In the above operation examples, although the term "DCI format 0_X/1_X" is used, it may be read as DCI format 0_3/1_3 as described above.

The UE capability may be specified separately according to the UL operation or the DL operation. In addition, the UE capability may be specified separately depending on whether the number of cells scheduled by the DCI format 0_X/1_X is one or more.

### (4) Operation and effects

According to the embodiment described above, the following operation and effects are obtained. Specifically, according to the operation examples described above, the UE 200 can determine whether or not to support existing cross carrier scheduling, and determine the functions to be supported as mandatory or optional when realizing Single DCI Multi-Cell PDSCH/PUSCH scheduling. Therefore, it is possible to achieve stable and appropriate operations even when Single DCI Multi-Cell PDSCH/PUSCH scheduling is introduced.

In the present embodiment, support for the UE capability relating to existing cross carrier scheduling may be mandatory. Therefore, Single DCI Multi-Cell PDSCH/PUSCH scheduling can be introduced while maintaining compatibility with cross carrier scheduling.

In the present embodiment, when supporting scheduling targeted for a combination of multiple cells (Set of cells) using DCI with DCI format 0_X/1_X, the support for a specific UE Capability relating to the scheduling may be mandatory or optional. For example, the support for the UE Capability relating to the number of cells (the number of co-scheduled cells) scheduled simultaneously or the number of sets of cells may be at least either mandatory or optional. Therefore, it is possible to achieve stable and appropriate operations according to the capability of the UE even when Single DCI Multi-Cell PDSCH/PUSCH scheduling is introduced.

### (5) Other embodiments

Although the embodiment has been described above, the present disclosure is not limited to the description of the embodiment, and it will be obvious to those skilled in the art that various modifications and improvements are possible.

For example, although the embodiment described above has been described using the terms "single DCI multi-slot PDSCH/PUSCH scheduling" and "single DCI Multi-Cell PDSCH/PUSCH scheduling", these terms may be called by different names as long as they refer to the function for scheduling PDSCH/PUSCH across multiple slots using one DCI, or the function for scheduling PDSCH/PUSCH across multiple CCs using single (one) DCI. In addition, as described above, the channels are not limited to PDSCH/PUSCH, and may include control channels and/or other data channels.

Further, in the embodiment described above, the UE capability signaling may be based on any one of Per-UE, Per-FR, Per-TDD/FDD, Per-band, Per-BC (Band Combination), Per-FS (Feature Set), and Per-FSPC (Feature Set Per CC).

The UE 200 may report the UE capability to the scheduling CC or to the scheduled CC. In addition, the UE 200 may report the UE capability to the CC that transmits the PUCCH.

In the above disclosure, terms such as configure, activate, update, indicate, enable, specify, and select may be read interchangeably. Similarly, terms such as link, associate, correspond, and map may be read interchangeably, and terms such as allocate, assign, monitor, and map may be read interchangeably.

In addition, terms such as specific, dedicated, UE-specific, and UE-dedicated may be read interchangeably. Similarly, terms such as common, shared, group-common, UE-common, and UE-shared may be read interchangeably.

The block diagram (FIG. 4) used in the description of the above-described embodiment illustrates blocks in units of functions. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

Further, the above-described gNB 100 and UE 200 (the devices) may function as a computer that performs processing of a radio communication method of the present disclosure. FIG. 9 is a diagram illustrating an example of a hardware configuration of the device. As illustrated in FIG. 9, the device may be configured as a computer device including a processor 1001, a memory 1002, a storage 1003, a communication device 1004, an input device 1005, an output device 1006, a bus 1007, and the like.

Furthermore, in the following description, the term "device" can be read as meaning circuit, device, unit, or the like. The hardware configuration of the device may include one or more devices illustrated in the figure or may not include some of the devices.

Each of the functional blocks of the device (FIG. 4) is implemented by means of any of hardware elements of the computer device or a combination of the hardware elements.

Each function in the device is realized by loading predetermined software (programs) on hardware such as the processor 1001 and the memory 1002 so that the processor 1001 performs arithmetic operations to control communication via the communication device 1004 and to control at least one of reading and writing of data on the memory 1002 and the storage 1003.

The processor 1001 controls the whole computer by, for example, running an operating system. The processor 1001 may be configured with a0 central processing unit (CPU), which includes interfaces with peripheral apparatus, control apparatus, computing apparatus, a register, and so on.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus." The above recording medium may be a database including the memory 1002 and/or the storage 1003, a server, or any other appropriate medium.

The communication apparatus 1004 is hardware (transmitting/receiving device) for allowing inter-computer communication via at least one of wired and wireless networks, and may be referred to as, for example, a "network device," a "network controller," a "network card," a "communication module," and so on.

The communication apparatus 1004 may be configured to include a high frequency switch, a duplexer, a filter, a frequency synthesizer, and so on in order to realize, for example, at least one of frequency division duplex (FDD) and time division duplex (TDD).

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the device may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these. According to the above, a case is described in which there is a single network node other than the base station 10. However, a combination of multiple other network nodes may be considered (e.g., MME and S-GW).

Information or signals (information and the like) may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any of a one of various different technologies. For example, data, an instruction, a command, information, a signal, a bit, a symbol, a chip, or the like, described throughout the present application, may be represented by a voltage, an electric current, electromagnetic waves, magnetic fields, magnetic particle, optical fields, a photon, or a combination thereof.

It should be noted that a term used in the present specification and/or term required for understanding of the present specification may be replaced by a term having the same or similar meaning. For example, a channel and a symbol may be a signal (signaling). Further a signal may also be a message. Further, the component carrier (CC) may be referred to as a carrier frequency, cell, frequency carrier, or the like.

As used in the present disclosure, the terms "system" and "network" are used interchangeably.

Furthermore, the information, parameters, and the like, described in the present disclosure may be expressed using absolute values, relative values from a predetermined values, or they may be expressed using corresponding different information. For example, a radio resource may be what is indicated by an index.

The names used for the parameters described above are not used as limitation. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier, " and so on can be used interchangeably. The base station may be referred to as the terms such as a "macro cell," a "small cell," a "femto cell," a "pico cell," and so on.

A base station can accommodate one or a plurality of (for example, three) cells (also called sectors). When a base station accommodates a plurality of cells, the entire coverage area of the base station can be partitioned into multiple smaller areas, and each smaller area can provide communication services through base station subsystems (for example, indoor small base stations (Remote Radio Heads (RRHs))).

The term "cell" or "sector" refers to part of or the entire coverage area of at least one of a base station and a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS), " "user terminal," "user equipment (UE), " and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a mobile station (hereinafter, a user terminal). For example, each aspect/embodiment of the present disclosure may be applied to the structure that replaces a communication between a base station and a mobile station with a communication between a plurality of mobile stations (for example, which may be referred to as "Device-to-Device (D2D)," "Vehicle-to-Everything (V2X)," and the like). In this case, mobile stations may have the functions of the base stations described above. The words such as "uplink" and "downlink" may be interpreted as the words corresponding to the terminal-to-terminal communication (for example, "side"). For example, an uplink channel, a downlink channel and so on may be interpreted as a sidelink channel (or sidelink).

Likewise, the mobile station in the present disclosure may be interpreted as base station. In this case, the base station may have the functions of the mobile station described above.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe, " a "long subframe, " a "slot," or the like. A TTI that is shorter than a normal TTI may be referred to as a "shortened TTI, " a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP (s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

"Means" included in the configuration of each of the above apparatuses may be replaced by "parts", "circuits", "devices", etc.

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

In the case where the terms "include", "including" and variations thereof are used in the present disclosure, these terms are intended to be comprehensive in the same way as the term "comprising". Further, the term "or" used in the present specification is not intended to be an "exclusive or".

In the present disclosure, where an article is added by translation, for example "a", "an", and "the", the disclosure may include that the noun following these articles is plural.

As used herein, the term "determining" may encompasses a wide variety of actions. For example, "determining" may be regarded as judging, calculating, computing, processing, deriving, investigating, looking up (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing and the like. That is, "determining" may be regarded as a certain type of action related to determining.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

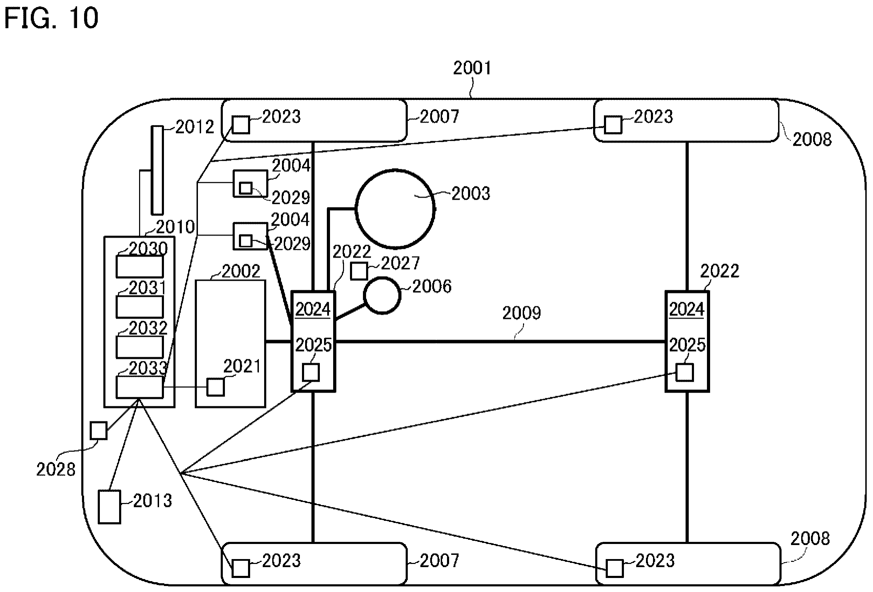

FIG. 10 shows a configuration example of a vehicle 2001. As shown in FIG. 10, the vehicle 2001 includes a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021 to 2029, an information service unit 2012, and a communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user. The electronic control unit 2010 includes a microprocessor 2031, a memory (ROM, RAM) 2032, and a communication port (IO port) 2033. The electronic control unit 2010 receives signals from the various sensors 2021-2027 provided in the vehicle. The electronic control unit 2010 may be referred to as an ECU (Electronic control unit).

The signals from the various sensors 2021 to 2028 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 1 by using information obtained from the external device through the communication module 2013 or the like.

The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 1 via a communication port. For example, the communication module 2013 transmits and receives data via a communication port 2033, to and from the drive unit 2002, the steering unit 2003, the accelerator pedal 2004, the brake pedal 2005, the shift lever 2006, the left and right front wheels 2007, the left and right rear wheels 2008, the axle 2009, the microprocessor 2031 and the memory (ROM, RAM) 2032 in the electronic control unit 2010, and sensors 2021 to 2028 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2028 described above input to the electronic control unit 2010, information obtained based on the signals, and information based on an input from the outside (a user) obtained via the information service unit 2012, to the external apparatus via radio communication. The electronic control unit 2010, the various sensors 2021 to 2028, the information service unit 2012, and the like may be referred to as input units that receive input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021-2028, etc., mounted in the vehicle 2001.

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### [Additional notes]

The above disclosure may be expressed as follows. A first feature is a terminal including: a control unit that assumes that support for cross carrier scheduling in which scheduling is applied across multiple carriers is mandatory when supporting scheduling targeted for a combination of multiple cells using single downlink control information; and a transmission unit that transmits terminal capability information relating to scheduling based on the assumption.

A second feature is that in the first feature, the control unit assumes that terminal capability relating to the cross carrier scheduling is mandatory when the terminal supports only a case in which a cell to which the single downlink control information is transmitted is not included in multiple cells scheduled simultaneously.

A third feature is a terminal including: a control unit that assumes that support for a specific terminal capability relating to scheduling is mandatory or optional when supporting the scheduling targeted for a combination of multiple cells using single downlink control information; and a transmission unit that transmits terminal capability information relating to scheduling based on the assumption.

A fourth feature is that in the third feature, the control unit assumes that support for a terminal capability relating to the number of cells scheduled simultaneously or the number of sets of cells is at least either mandatory or optional.

### Reference Signs List

- 10: Radio communication system
- 20: NG-RAN
- 100: gNB
- 200: UE
- 210: Radio signal transmission and reception unit
- 220: Amplifier unit
- 230: Modulation and demodulation unit
- 240: Control signal and reference signal processing unit
- 250: Encoding/decoding unit
- 260: Data transmission and reception unit
- 270: Control unit
- 1001: Processor
- 1002: Memory
- 1003: Storage
- 1004: Communication device
- 1005: Input device
- 1006: Output device
- 1007: Bus
- 2001: Vehicle
- 2002: Drive unit
- 2003: Steering unit
- 2004: Accelerator pedal
- 2005: Brake pedal
- 2006: Shift lever
- 2007: Left and right front wheels
- 2008: Left and right rear wheels
- 2009: Axle
- 2010: Electronic control unit
- 2012: Information service unit
- 2013: Communication module
- 2021: Current sensor
- 2022: Revolution sensor
- 2023: Pneumatic sensor2024 Vehicle speed sensor
- 2025: Acceleration sensor
- 2026: Brake pedal sensor
- 2027: Shift lever sensor
- 2028: Object detection sensor
- 2029: Accelerator pedal sensor
- 2030: Driving support system unit
- 2031: Microprocessor
- 2032: Memory (ROM, RAM)
- 2033: Communication port

## Claims

1. A terminal comprising:
a control unit that assumes that support for cross carrier scheduling in which scheduling is applied across multiple carriers is mandatory when supporting scheduling targeted for a combination of multiple cells using single downlink control information; and
a transmission unit that transmits terminal capability information relating to scheduling based on the assumption.

2. The terminal according to claim 1, wherein
the control unit assumes that terminal capability relating to the cross carrier scheduling is mandatory when the terminal supports only a case in which a cell to which the single downlink control information is transmitted is not included in multiple cells scheduled simultaneously.

3. A terminal including:
a control unit that assumes that support for a specific terminal capability relating to scheduling is mandatory or optional when supporting the scheduling targeted for a combination of multiple cells using single downlink control information; and
a transmission unit that transmits terminal capability information relating to scheduling based on the assumption.

4. The terminal according to claim 3, wherein
the control unit assumes that support for a terminal capability relating to the number of cells scheduled simultaneously or the number of sets of cells is at least either mandatory or optional.

5. A radio communication method in a terminal, the method comprising:
a step of assuming that support for cross carrier scheduling in which scheduling is applied across multiple carriers is mandatory when supporting scheduling targeted for a combination of multiple cells using single downlink control information; and
a step of transmitting terminal capability information relating to scheduling based on the assumption.

6. A radio communication method in a terminal, the method comprising:
a step of assuming that support for a specific terminal capability relating to scheduling is mandatory or optional when supporting the scheduling targeted for a combination of multiple cells using single downlink control information; and
a step of transmitting terminal capability information relating to scheduling based on the assumption.
